# FASCICULE DE BREVET EUROPEEN

(11) **EP 0 350 361 B1**
(45) Date de publication et mention de la délivrance du brevet: **31.03.1993**
(21) Numéro de dépôt: 89401747.4
(22) Date de dépôt: 20.06.1989
(51) Int. Cl.: H04N 17/00, H04L 1/24

(54) **Dispositif d'évaluation de la marge de tolérance d'un signal vidéo numérique**
Vorrichtung für die Bewertung des Digitalvideosignaltoleranzbereichs
Device for evaluating the tolerance range of a digital video signal

(30) Priorité: 21.06.1988 FR 8808303
(43) Date de publication de la demande: 10.01.1990
(73) Titulaire: Etablissement Public Télédiffusion de France, 75015 Paris (FR)
(72) Inventeur: Cohen, Hervé, F-75011 Paris (FR); Fouillet, Jean-Marie, F-93360 Neuilly-Plaisance (FR)
(74) Mandataire: Fort, Jacques

(56) Documents cités:
- FR-A- 2 535 136
- FR-A- 2 606 575

## Description

L'invention vise à permettre l'évaluation de la marge de sécurité que présente un signal vidéo numérique, sur une interface vidéo numérique parallèle, à l'encontre d'une variation de phase entre signal d'horloge et signaux de données transitant en parallèle. Elle trouve une application particulièrement importante dans la réalisation d'outils de test permettant d'évaluer les équipements de télévision numérique conformes aux Recommandations 601 (paramètres de codage de télévision numérique pour studio) et 656 (interface pour les signaux vidéo numériques en composantes pour les systèmes de télévision à 525 lignes et à 625 lignes) du C.C.I.R.

La Recommandation 656 du C.C.I.R. définit une interface vidéo numérique parallèle destinée au passage d'un signal vidéo numérique comportant un signal d'horloge, constitué par une onde carrée à 27 MHz, et des signaux de donnée qui représentent, à chaque transition positive du signal d'horloge, un élément binaire d'un mot de donnée.

L'évaluation de la marge de sécurité d'un tel signal ou de signaux similaires vis-à-vis de diverses dégradations est utile pour déterminer si un équipement déterminé, à qualifier, peut être utilisé dans une chaîne d'équipements constituant une installation. En effet, un équipement récepteur peut être acceptable du fait qu'il décode correctement les données émises par un équipement à qualifier, lorsqu'il est placé juste à la sortie de ce dernier. Mais cet équipement récepteur ne fonctionnera pourtant pas correctement s'il est séparé de l'équipement à qualifier par des équipements de transmission introduisant des dégradations supplémentaires, comme par exemple un déphasage entre le signal d'horloge et les signaux de données ou une atténuation.

On a déjà proposé divers procédés permettant d'évaluer le déphasage supplémentaire entre horloge et données que peut encore tolérer le signal vidéo numérique reçu sur une interface sans dégrader la réception, c'est-à-dire la marge de sécurité offerte par ce signal vidéo numérique.

L'un des procédés connus consiste à mesurer le déphasage maximal, par rapport aux positions de référence, existant entre chacun des signaux de données et le signal d'horloge, en utilisant un oscilloscope à deux voies. Mais l'évaluation ainsi obtenue est imprécise, car les déphasages les plus grands entre horloge et données peuvent n'intervenir que très rarement, par exemple par suite de phénomènes aléatoires (gigue de phase) et d'interférences intersymboles, et être peu visibles.

Une autre solution consiste à visualiser, pour chacun des supports de signal de donnée, le diagramme en oeil et sa position par rapport à la transition positive du signal d'horloge et à en déduire une évaluation du déphasage encore tolérable. Mais l'obtention du diagramme en oeil implique généralement d'appliquer à l'entrée une suite binaire pseudo-aléatoire de façon à explorer l'ensemble des phénomènes d'interférences intersymboles (ISI) sur toutes les suites binaires possibles. Si l'injection d'une suite binaire pseudo-aléatoire à l'entrée de l'équipement est possible pour certains équipements, tels qu'un câble ou une grille de commutation, il n'en est pas toujours de même pour un équipement qui est source d'images, comme une caméra munie d'un codeur.

Enfin, ces deux procédés impliquent d'effectuer autant d'essais qu'il y a de supports de signaux de données dans l'interface.

On connaît par ailleurs (FR-A-2 535 136) un procédé et un dispositif permettant de contrôler la qualité de signaux. Le dispositif comporte trois circuits d'échantillonnage et de décision fonctionnant avec des horloges dont la seconde se différencie de la première en ce qu'elle est en avance de phase et la troisième se différencie de la première en ce qu'elle est en retard de phase. Des dispositifs de combinaison combinent d'une part les sorties des premier et second circuits, d'autre part les sorties des premier et troisième circuits pour fournir des signaux d'erreur respectifs.

L'invention vise à fournir un dispositif permettant d'évaluer de façon simple la marge de sécurité d'un signal vidéo numérique produit sur une interface vidéo numérique parallèle de sortie d'un équipement à vérifier vis-à-vis de déphasages supplémentaires entre le signal d'horloge et les signaux de données.

Dans ce but, l'invention propose notamment un dispositif suivant la revendication 1 ; d'autres dispositions encore sont données dans les revendications 2 à 5.

On voit que l'invention permet de déterminer la tolérance d'un signal vidéo numérique au déphasage susceptible d'être introduit par une chaîne de traitement, en une seule séquence, puisque tous les bits de données, donc tous les supports de données en parallèle, sont pris en considération à la fois.

Il faut encore noter qu'il est possible de mettre en oeuvre le dispositif sans interrompre pour autant la transmission des données dans une chaîne d'équipement : il suffit en effet d'intercaler le dispositif dans la chaîne en connectant l'interface vidéo-numérique parallèle de sortie de ce dispositif, sur laquelle est répété le signal présent sur l'interface vidéo-numérique parallèle d'entrée, à l'équipement suivant dans la chaîne d'équipement d'une installation. Du fait de cette interposition et de ce que l'équipement à évaluer n'a besoin ni de recevoir ni de produire des signaux particuliers, aucune interruption du service pendant les phases d'analyse n'est nécessaire.

L'invention sera mieux comprise à la lecture de la description qui suit de modes particuliers de mise en oeuvre de l'invention, donnés à titre d'exemples non limitatifs. La description se réfère aux dessins qui l'accompagnent, dans lesquels :
- la figure 1 est un schéma synoptique unifilaire de principe d'un dispositif suivant un mode particulier de réalisation de l'invention ;
- la figure 2 est un chronogramme montrant les signaux qui apparaissent à divers emplacements du schéma de la figure 1 ;
- la figure 3, similaire à la figure 1, montre une variante de réalisation.

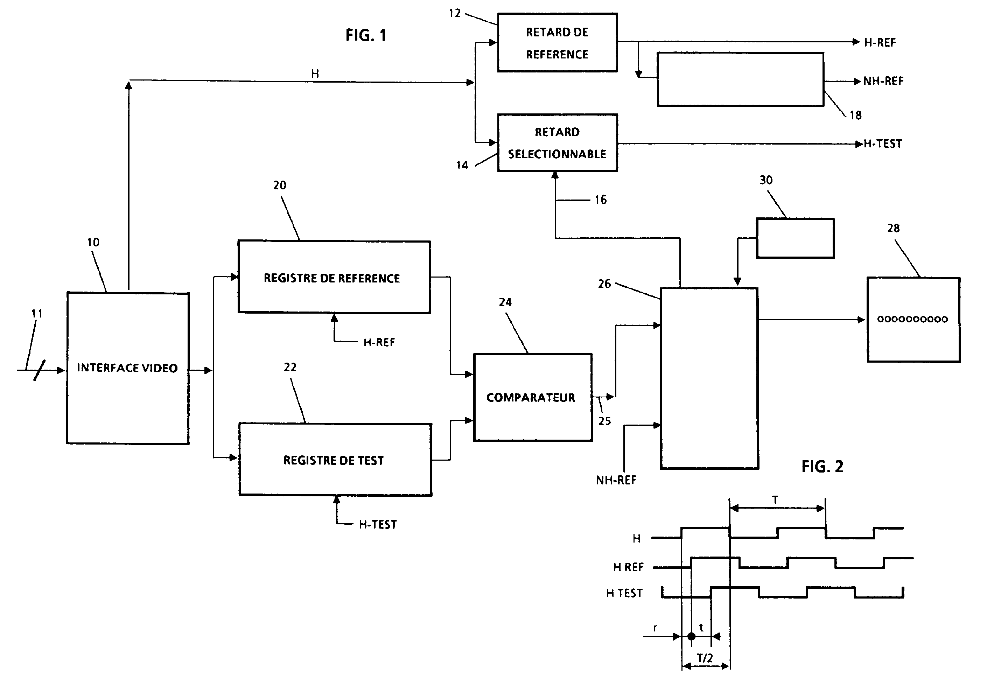

Le dispositif montré à titre d'exemple en figure 1 comporte un interface vidéo numérique parallèle d'entrée 10, qu'on supposera conforme à la recommandation 656 du CCIR et que, par simplicité, on désignera simplement par la suite sous le terme "interface d'entrée". Lors de la mise en oeuvre du dispositif, l'entrée 11 de l'interface est reliée à l'interface de sortie de l'équipement à analyser (non représenté).

Le dispositif de la figure 1 permet d'évaluer la marge de sécurité du signal vidéo numérique sous forme parallèle appliquée à l'entrée 11 à l'égard de déphasage entre le signal d'horloge et les signaux de données jusqu'à une valeur maximale T/2, où T désigne la période d'horloge, c'est-à-dire 1/27 de microseconde.

L'interface d'entrée 10 envoie le signal d'horloge H (figure 1) sur une chaîne comprenant deux circuits de retard 12 et 14 en parallèle. Le circuit de retard 12 fournit en sortie un signal d'horloge de référence H REF présentant un retard fixe et prédéterminé r par rapport à H (figure 2). Le circuit de retard 14 fournit sur sa sortie un signal H TEST présentant un retard modifiable par action sur son entrée de commande 16. Un inverseur 18 fournit, à partir du signal H REF, un signal NH REF qui est une onde carrée dont les transitions négatives correspondent aux transitions positives de H REF.

L'interface d'entrée 10 comporte une sortie de données constituée par un bus qui alimente d'une part un registre de référence 20, d'autre part un registre de test 22. Ces registres comportent des entrées d'horloge qui reçoivent respectivement les signaux H REF et H TEST et sont prévus de façon à mémoriser les mots de données qu'ils reçoivent lors des transitions positives de ces signaux.

Le retard r donné par le circuit à retard 12 est choisi de façon telle que les transitions positives H REF aient la même position temporelle, par rapport aux signaux de données présentés à l'entrée du registre de référence 20, que les transitions positives du signal d'horloge H par rapport aux signaux de données appliqués sur l'entrée 11 de l'interface d'entrée 10. Dans la pratique, le retard r correspond au temps de transit des données dans l'interface 10.

Il faut remarquer que, comme les signaux d'horloge H REF et H TEST sont périodiques avec une période T, il est possible de donner au décalage t entre les signaux une valeur positive aussi bien qu'une valeur négative, c'est-à-dire de donner aux transitions positives de H TEST aussi bien une avance qu'un retard par rapport aux transitions correspondantes de H REF, dans une limite égale à |T/2|.

Les données mémorisées dans les registres 20 et 22 sont appliquées sur les deux entrées d'un comparateur 24 qui fournit sur sa sortie 25 un signal binaire indiquant si toutes les données sont identiques. Cette sortie est reliée à l'entrée d'un dispositif de gestion 26 assurant des fonctions de commande et de traitement de signaux. Le signal d'horloge NH REF est appliqué au dispositif de commande pour provoquer le transfert du signal binaire de sortie du comparateur 24 en mémoire de ce dispositif lors des transitions positives de NH REF, donc après les transitions positives de H REF et H TEST correspondant à un même mot de données.

Le dispositif de gestion 26 assure notamment la commande du retard (r + t) de H TEST par rapport à H et la commande de l'affichage des résultats sur un organe de visualisation 28. Le dispositif de gestion peut être constitué de façon à maintenir un retard t déterminé pendant un intervalle de temps sélectionné suffisant pour donner un résultat significatif puis à augmenter ce retard pour une nouvelle vérification. Le dispositif détermine ainsi, pour chaque retard t, s'il y a identité des mots fournis par les registres 20 et 22. Le dispositif de gestion peut par exemple être prévu pour fournir des déphasages prenant toutes les valeurs entières successives entre -15 nanosecondes et +15 nanosecondes, chaque retard t étant maintenu pendant un intervalle de temps de comparaison de 100 µs.

L'organe de visualisation peut avoir diverses constitutions. Il peut par exemple comporter une rangée de points d'affichage, illuminables chacun en rouge ou en vert par une source distincte et correspondant chacun à un déphasage t donné. Initialement toutes les sources vertes sont allumées. Puis, pour chaque déphasage t, le dispositif de gestion 26 envoie à l'afficheur l'adresse d'un point d'affichage correspondant et une information maintenant la source verte allumée si toutes les comparaisons ont révélé l'identité des signaux de sortie des registres 20 et 22, la remplaçant par la source rouge si au moins une des comparaisons (ou dans d'autres cas, un nombre minimum de comparaisons) a révélé une discordance. Si l'excitation d'une source rouge est rendue permanente, le nombre de points illuminés en rouge ne peut qu'augmenter au fur et à mesure du déroulement d'une évaluation.

A l'issue d'une séquence d'estimation, les indications données par le dispositif d'affichage doivent être supprimées : pour cela un interface 30 commandé manuellement peut être prévu pour fournir au dispositif de gestion 26 un signal de ré-initialisation qui provoque l'illumination en vert de tous les points de l'afficheur 28.

L'interprétation des résultats donnés par le dispositif qui vient d'être décrit est très simple : l'ensemble des points contigus illuminés en vert, comprenant en règle générale le point médian correspondant à un déphasage t nul, donne par son étendue une indication sur la tolérance du signal. Les avances et retards de phase tolérables par le signal correspondent aux limites de l'invervalle défini par les sources extrêmes vertes, à gauche et à droite.

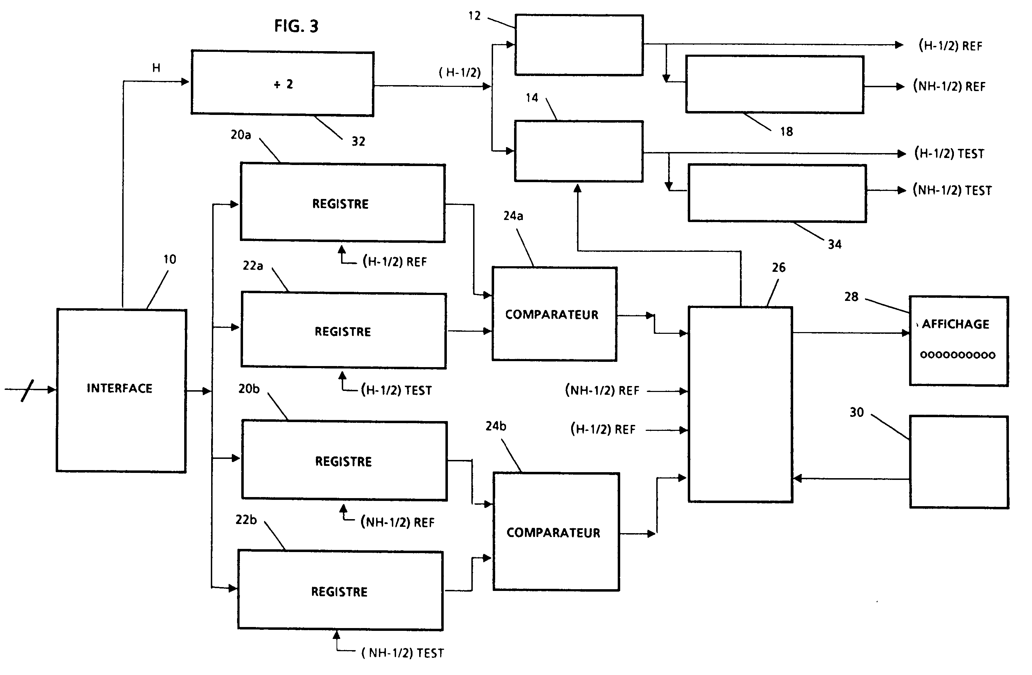

Dans certains cas, il est souhaitable de pouvoir déterminer la tolérance du signal à des déphasages entre l'horloge H et les données dépassant T/2. Dans ce cas, le dispositif schématisé en figure 3 (où les organes correspondant à ceux de la figure 2 sont désignés par le même numéro de référence) peut être utilisé.

Le dispositif de la figure 3 se différencie essentiellement de celui de la figure 1 en ce qu'il utilise un signal d'horloge interne (H-1/2) à fréquence moitié du signal d'horloge H du signal vidéo, donc à 13,5 MHz, et deux branches de comparaison au lieu d'une.

Pour cela, le dispositif montré en figure 3 comporte un générateur de signal d'horloge (H-1/2) à fréquence moitié à partir du signal H de sortie de l'interface 10. Le générateur 32 peut être constitué par un simple diviseur. Il attaque deux circuits de retard 12 et 14 montés en parallèles et remplissant la même fonction que les circuits correspondants de la figure 1. Un circuit inverseur supplémentaire 34 est prévu pour fournir un signal (NH-1/2)TEST inverse du signal (H-1/2)TEST fourni par le circuit à retard sélectionnable 14. Le circuit à retard 14 est prévu pour permettre d'obtenir un retard positif ou négatif pouvant atteindre T par rapport à l'horloge (H-1/2)REF, et non plus seulement T/2.

Le signal de donnée sortant de l'interface d'entrée 10 attaque deux branches en parallèle au lieu d'une seule dans le cas de la figure 1. Les deux branches ont la même constitution. La première comprend un registre de référence 20a et un registre de test 22a dont les entrées d'horloge reçoivent respectivement les signaux d'horloge (H-1/2)REF et (H-1/2)TEST. Un comparateur 24a fournit un signal binaire indiquant s'il y a ou non identité du contenu des registres 20a et 22a lors des transitions positives du signal (NH-1/2)REF.

Les entrées d'horloge des registres 20b et 22b de l'autre branche reçoivent de leur côté les signaux (NH-1/2)REF et (NH-1/2)TEST et le résultat de la comparaison dans le comparateur 24b est fourni au dispositif de gestion 26 lors des transitions positives du signal (H-1/2)REF.

Le fonctionnement du dispositif de la figure 3 est très similaire à celui de la figure 1 si ce n'est que, pour chaque signal de donnée, deux comparaisons sont faites. Le dispositif de gestion 26 est prévu de façon à indiquer un défaut de tolérance à un déphasage dès que l'un ou l'autre des comparateurs 24a ou 24b indique un défaut d'identité pour ce déphasage.

Etant donné que le déphasage t entre signal d'horloge et signal de donnée dont l'effet peut être évalué a une amplitude plus grande que dans le cas de la figure 1, on sera souvent amené à adopter des pas différents de variation du déphasage. On peut par exemple adopter des déphasages limite de -34 ns et +34 ns. Il est difficile de dépasser ces valeurs, du fait qu'il est nécessaire de réserver une durée minimale entre le déclenchement de l'écriture d'un mot de donnée dans les registres 20 et 22 et la prise en compte du résultat de la comparaison entre les mots de donnée. Cette durée minimale dépend des composants utilisés. Elle est nécessaire pour que le mot de donnée de sortie du registre 20 ou 22 soit bien stabilisé lors de la comparaison, c'est-à-dire lors de la transition positive du signal (NH-1/2)REF ou (H-1/2)REF. De même, dans le cas de la figure 1, on ne peut pas arriver jusqu'à -18,5 et +18,5 ns.

L'invention ne se limite évidemment pas aux modes particuliers de réalisation qui ont été décrits à titre d'exemples. En particulier le dispositif de gestion 26 peut être prévu pour présenter les résultats sous une forme différente : le passage d'un point d'affichage du vert au rouge sur l'organe de visualisation 28 peut être réversible, de façon que le défaut de tolérance ne soit indiqué que s'il existe lors de la plus récente durée de comparaison pour le déphasage correspondant au point. Le dispositif de gestion peut également comporter un microprocesseur permettant d'interrompre la séquence de mesure à déphasage croissant dès qu'un défaut de tolérance est constaté. Le degré de tolérance, c'est-à- dire la marge de sécurité, peut être donné sous forme numérique en valeur réelle ou par rapport à un seuil donné.

## Revendications

1. Dispositif d'évaluation de la marge de sécurité d'un signal vidéo numérique, sur une interface vidéo numérique parallèle, à l'encontre d'une variation de phase entre signal d'horloge et signaux de données transitant en parallèle, caractérisé en ce qu'il comprend : une interface d'entrée (10) ; des moyens (12) pour générer, à partir du signal d'horloge à la sortie de l'interface d'entrée, un signal d'horloge de référence (H REF ou H-1/2 REF) ayant un déphasage fixe compensant celui provoqué par l'interface d'entrée et un signal d'horloge de test (H-TEST ou H-1/2 TEST) ayant un déphasage sélectionnable ; au moins deux registres de décodage semblables (20,22) recevant le signal de données et ayant des entrées d'horloge recevant respectivement le signal d'horloge de référence et le signal d'horloge de test ; un comparateur (24) relié à la sortie des deux registres et fournissant en sortie un signal en cas de différence ; et des moyens de gestion (26) permettant d'accroître progressivement l'amplitude du déphasage sélectionnable en fonction du signal de sortie du comparateur (24) et d'indiquer, pour chaque déphasage, l'existence de non concordances.

2. Dispositif selon la revendication 1, caractérisé en ce que les moyens de gestion (26) sont constitués de façon à prendre en compte la sortie du comparateur (24) lors des transitions du signal d'horloge de référence inverse des transitions commandant le registre de décodage correspondant (20).

3. Dispositif selon la revendication 1 ou 2, caractérisé en ce que les moyens de gestion sont prévus de façon à commander les moyens (14) générant le signal d'horloge de test de façon à modifier, à intervalles de temps réguliers, le déphasage.

4. Dispositif selon la revendication 1, caractérisé en ce qu'il comprend des moyens (32) pour fournir, à partir du signal d'horloge à la sortie de l'interface d'entrée (10) un signal d'horloge interne (H-1/2) à fréquence moitié qui est appliqué auxdits moyens de génération du signal d'horloge de référence (H-1/2)REF et du signal d'horloge de test (H-1/2)TEST et en ce qu'il comporte deux branches ayant chacune deux registres de codage dont l'un (20a ou 20b) reçoit le signal d'horloge de référence (H-1/2 REF) ou respectivement le signal inverse (NH-1/2 REF) tandis que l'autre (22a ou 22b) reçoit le signal d'horloge de test (H-1/2 TEST) ou respectivement le signal inverse (NH-1/2 TEST), chaque branche comportant de plus un comparateur (24a ou 24b) entre les sorties des registres respectifs (20a-22a ou 20b-22b) relié aux moyens de gestion.

5. Dispositif selon l'une quelconque des revendications 1 à 4, caractérisé en ce qu'il comprend de plus un organe de visualisation (28) indiquant le déphasage à partir duquel une discordance est révélée pour une comparaison ou un nombre minimum de comparaisons.

## Patentansprüche

1. Vorrichtung für die Bewertung des Toleranzbereichs eines digitalen Videosignals auf einem digitalen, parallelen Videointerface bezüglich einer Phasenänderung zwischen einem Taktsignal und parallel anliegenden Datensignalen, gekennzeichnet durch ein Eingangsinterface (10); Mittel (12), um aus dem Taktsignal am Ausgang des Eingangsinterface ein Referenz-Taktsignal (H REF oder H-1/2 REF), das eine feste Phasenverschiebung hat, welche durch das Eingangsinterface hervorgerufen worden ist, und ein Test-Taktsignal (H TEST oder H-1/2 TEST) mit einer wählbaren Phasenverschiebung zu erzeugen; mindestens zwei gleichartige Dekodierregister (20, 22), welche das Datensignal empfangen und Takteingänge haben bzw. das Referenz- und das Test-Taktsignal empfangen; einen mit dem Ausgang der beiden Register verbundenen Vergleicher (24), welcher am Ausgang ein Signal im Falle einer Differenz liefert, und Steuermittel (26), um fortlaufend die Amplitude der wählbaren Phasenverschiebung zu vergrößern, und um für jede Phasenverschiebung das Vorhandensein einer Nicht-Übereinstimmung anzuzeigen.

2. Vorrichtung nach Anspruch 1, dadurch gekennzeichnet, daß die Steuermittel (26) vorgesehen sind, um den Ausgang des Vergleichers (24) bei Übergängen des Referenz-Taktsignals im Gegensatz zu Übergängen zu berücksichtigen, welche das entsprechende Dekodierregister (20) steuern.

3. Vorrichtung nach Anspruch 1 oder 2, dadurch gekennzeichnet, daß die Steuermittel vorgesehen sind, um den Mitteln (14), welche das Test-Taktsignal erzeugen, zu befehlen, in regelmäßigen Zeitintervallen die Phasenverschiebung zu modifizieren.

4. Vorrichtung nach Anspruch 1, gekennzeichnet durch Mittel (32), um von dem Taktsignal am Ausgang des Eingangsinterfaces (10) ab ein internes Taktsignal (H-1/2) halber Frequenz zu liefern, welches an Mittel zum Erzeugen des Referenz-Taktsignals (H-1/2 REF) und des Test-Signals (H-1/2 TEST) angelegt wird, und durch zwei Zweige mit jeweils zwei Kodierregistern, von welchen das eine (20a oder 20b) das Referenz-Signal (H-1/2 REF) oder das inverse Signal (NH-1/2 REF) empfängt, während das andere (22a oder 22b) das Test-Taktsignal (H-1/2 TEST) bzw. das inverse Signal (NH-1/2 TEST) empfängt, wobei jeder Zweig noch dazu einen Vergleicher (24a oder 24b) zwischen den Ausgängen der jeweiligen Register (20a bis 22a oder 20b bis 22b) aufweist, welche mit den Steuermitteln verbunden sind.

5. Vorrichtung nach einem der vorhergehenden Ansprüche 1 bis 4, gekennzeichnet durch zumindest ein Anzeigeorgan (28), welche die Phasenverschiebung anzeigt, von welcher ab eine Nichtübereinstimmung für einen Vergleich oder eine Minimalanzahl von Vergleichen festgehalten wird.

## Claims

1. A device for evaluating the safety margin of a digital video signal, on a parallel digital video interface, against a phase shift between a clock signal and data signals flowing in parallel,
characterised in that it comprises: an input interface (10); means (12) for generating, from the clock signal at the output of the input interface, a reference clock-signal (H REF or H-1/2 REF) having a fixed phase shift compensating that due to the input interface and a test clock signal (H-TEST or H-1/2 TEST) having a selectable phase shift; at least two similar decoding registers (20, 22) receiving the data signal and having clock inputs respectively receiving the reference clock signal and the test clock signal; a comparator (24) connected to the output of the two registers and delivering an output signal if there is a discrepancy; and control means (26) permitting to progressively increase the amount of selectable phase shift responsive to the output signal of the comparator (24) and indicating, for each phase shift, the existence of discrepancies.

2. Device according to claim 1, characterized in that the control means (26) are arranged to take into account the output of the comparator (24) upon occurrence of transitions of the reference clock signal which are opposed to the transitions which cause operation of the respective decoding register (20).

3. Device according to claim 1 or 2, characterized in that the control means are arranged for controlling the means (14) which generate the test clock signal and modifying the phase shift at regular time intervals.

4. Device according to claim 1, characterized in that it comprises means (32) for deriving, from the clock signal at the output of the input interface (10), an internal clock signal (H-1/2) at half frequency which is applied to said means for generating the reference clock signal (H-1/2)REF and the test clock signal (H-1/2)TEST and that it comprises two branches each having two encoding registers one of which (20a or 20b) receives the reference clock signal (H-1/2 REF) or respectively the reverse signal (NH-1/2 REF) while the other (22a or 22b) receives the test clock signal (H-1/2 TEST) or respectively the reverse signal (NH-1/2 TEST), each branch further comprising a comparator (24a or 24b) between the outputs of the respective registers (20a-22a or 20b-22b) connected to the control means.

5. Device according to any one of claims 1-4, characterized in that it further comprises a display unit (28) indicating the phase shift from which a discrepancy is revealed, for one comparison or a minimum number of comparisons.
